(19) Europäisches Patentamt

European Patent Office

Office européen des brevets

(11) **EP 3 470 889 A2**

(12) **EUROPEAN PATENT APPLICATION**

(43) Date of publication:
   **17.04.2019 Bulletin 2019/16**

(51) Int Cl.:
   **G01V 8/00** *(2006.01)*     **G01K 11/32** *(2006.01)*
   **G01V 99/00** *(2009.01)*     **G01V 9/00** *(2006.01)*

(21) Application number: **18195701.0**

(22) Date of filing: **20.09.2018**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(30) Priority: **20.09.2017   GB 201715166**

(71) Applicant: **AiQ Dienstleistungen UG
   (haftungsbeschränkt)
   71034 Böblingen (DE)**

(72) Inventor: **Lauber, Thomas
   71034 Böblingen (DE)**

(74) Representative: **Dilg, Haeusler, Schindelmann
   Patentanwaltsgesellschaft mbH
   Leonrodstrasse 58
   80636 München (DE)**

(54) **CONDITION MONITORING OF AN OBJECT**

(57) Disclosed is a method for estimating a condition of an object (71), in particular a cable or a pipeline, and/or material (73), in particular soil, surrounding the object, the method comprising: measuring a time course (Tsens, 5, 7, 9, 11) of values of the temperature of an optical fiber (75) using a distributed temperature sensing system (77) employing the optical fiber in proximity to the object; adjusting a value of at least one model parameter of plural model parameters of a thermal model (13, 40), in particular relating to thermal properties of the object and the surrounding material, based on the measured temperature time course; comparing the adjusted value of at least one model parameter with a value determined theoretically and/or based on physical modeling and/or measured from another information source and/or predetermined and/or based on a value of a load and/or temperature the object is subjected to, to estimate the condition of the object and/or the surrounding material.

Fig. 4

EP 3 470 889 A2

## Description

Field of the invention

The present invention relates to a method for estimating a condition of an object, in particular a cable or a pipeline, and/or material surrounding the object and further relates to an arrangement for estimating a condition of an object, wherein distributed temperature sensing is applied.

Prior art

In power transmission lines, DTS systems are used regularly to monitor the cable temperature with a fiber applied in the outer layers of the cable or in the near surrounding. DTS instruments are in many cases combined with a real-time thermal rating system (RTTR) to gain information on conductor temperature. Both together allow warning of actual overheating and a prognosis of future short or long term current carrying capacity. For monitoring the health of a cable, hot spots can be detected and characterized to allow warning the operator of potential problems.

Detection of hot spots as an indicator for problems of a power transmission line with DTS may be used as a standard procedure especially for buried HV-cables. A localized increase of temperature may indicate that there is an increased loss which may be a consequence of a defect of the cable. Another reason for locally increased temperature may be that changes in the surrounding of the cable cause a reduced effectiveness of heat transport which also may cause risk of failure or at least reduced ampacity of the cable system.

US2015241251 A1 discloses an abnormality detection system based on a temperature distribution measurement apparatus (distributed temperature sensor: DTS). According to the technique disclosed therein a backscattered light detection unit, acquiring a first intensity distribution of backscattered light by causing light to enter an optical fiber from one end of the optical fiber, and, by using the backscattered light detection unit, acquiring a second intensity distribution of backscattered light by causing light to enter the optical fiber from another end of the optical fiber; and by using a data processing unit, calculating a product of a value obtained by applying a first FIR (Finite Impulse Response) filter to the first intensity distribution, and a value obtained by applying a second FIR filter to the second intensity distribution for each of locations on the optical fiber in a length direction of the optical fiber.

US2017003177 A1 discloses a distributed sensing device configured for measuring signals over time and space and a filtering unit configured for filtering the measured data to reduce noise and substantially preserve real features based on at least one filter parameter which is determined depending on the data which relate to the physical quantity at a plurality of different times.

According to the invention disclosed therein, dynamic filtering and all kind of filters like Kalman filters, or wavelet transformation based filters can be used to reduce noise.

DE19921256 A1 discloses how to monitor temperature anomalies on basis of distributed fiber-optic temperature sensor data. According to the disclosed invention a matrix of reference values is compared to a matrix of currently measured data.

A detection of a hot spot may indicate that there might be a problem, but conventional system do not give an indication what the reason is, or if the cable installation or pipeline degrades further towards a potential failure. The monitoring of the hot spot temperature rise is not revealing information on hot spot severity.

Thus, there may be a need for a method and arrangement for estimating a condition of an object, in particular a buried object, such as a cable or a pipeline and/or material surrounding the object, in particular providing information regarding the reason of the problem of the object and wherein the method is capable of reducing the number of false alarms.

Summary of the invention

According to an embodiment of the present invention it is provided a method for estimating a condition of an object, in particular a cable or a pipeline, and/or material, in particular soil, surrounding the object, the method comprising: measuring a time course of values of the temperature of an optical fiber using a distributed temperature sensing system employing the optical fiber in proximity to the object; adjusting a value of at least one model parameter of plural model parameters of a thermal model, in particular relating to thermal properties of the object and the surrounding material, based on the measured temperature time course; comparing the adjusted value of at least one model parameter with a value determined theoretically and/or based on physical modeling and/or measured from another information source and/or predetermined and/or based on a value of a load and/or temperature the object is subjected to, to estimate the condition of the object and/or the surrounding material.

The object may be a buried object, such as buried in soil. The distributed temperature sensing system employs the optical fiber which is arranged in proximity to the object also buried within the soil, to detect temperature changes by sending optical pulses through the optical fiber which interact with the material in the optical fiber and are scattered depending on changes of the refractive index, for example by Rayleigh scattering. The backscattered light or in general electromagnetic radiation, may be analyzed to detect local changes of the optical properties of the optical fiber which then allows to determine the temperature at plural locations of the optical fiber. The optical fiber may be arranged along the object (and spaced apart from it), i.e. along an electric cable or a pipeline, for example conveying gas or oil. The time course measures plural values of the temperature in dependence of time.

The thermal model may model temperature fluxes between the optical fiber and the object. The thermal model may comprise plural model parameters, such as thermal resistance of the object, thermal resistance of the soil surrounding the object, the heat capacity of the soil surrounding the object and the heat capacity of the object. Further model parameters are possible.

At least one model parameter may be adjusted in dependence of the measured temperature time course. The adjusted model parameter may for example relate to one of the aforementioned model parameters or for example relate to the temperature of the object or a thermal loss of the object, for example a thermal loss of an electrical cable carrying an electrical current. The thermal loss of the cable may theoretically be determined based on the known material properties of the conductors and/or insulation forming the cable and magnitude of the electric current being conveyed through the cable.

If the adjusted model parameter, for example the thermal loss as obtained from the temporal course, does not match the theoretically determined value or determined value based on physical modeling and/or measured from another information source and/or predetermined and/or based on a value of a load and/or a temperature the object is subjected to, it may indicate, that the cable at this particular considered location deteriorates or has some damage. Thus, for example, if a particular high temperature is measured close to a particular location of the cable, it may be concluded that the cable is damaged close to the location.

The present invention provides another embodiment of a method for estimating a condition of an object, the method comprising measuring a time course of values of the temperature of an optical fiber using a distributed temperature sensing system employing the optical fiber in proximity to the object; deriving, using a value of a load and/or temperature the object is subjected to, a time course of temperature values of the optical fiber based on a thermal model having plural model parameters; comparing the measured temperature time course with the derived temperature time course, to estimate the condition of the object and/or the surrounding material.

According to this embodiment, the model parameters are held fixed and based on the thermal model having the fixed thermal model parameters a temperature time course is derived. When the measured temperature time course and the derived temperature time course does not match within particular error margins, the condition of the object and/or the surrounding material may be estimated. For example, it may be concluded that one of the model parameters is faulty. Since the model parameters relate to the properties of the object and/or surrounding environment, the condition of the object and/or the environment may be inferred from the comparison of the different time courses.

According to an embodiment of the present invention, adjusting the at least one model parameter includes at least one of the following: performing a least-square optimization; applying a Kalman filter; applying a Wiener filter; applying a Bayes filter; applying a maximum likelihood estimation. In general, a least square optimization may be performed and one or more or a combination of filters may be applied. Thereby, conventionally known techniques for adjusting model parameters may be applied, thereby simplifying the method.

According to an embodiment of the present invention, the plural model parameters include at least one of the following: temperature of at least a portion of the object; thermal capacity of at least a portion of the object; thermal resistance of at least a portion of the object; thermal capacity of the surrounding material between at least a portion of the object and the optical fiber and/or beyond the optical fiber; thermal resistance of the surrounding material between at least a portion of the object and the optical fiber and/or beyond the optical fiber; a parameter related to thermal loss (West) of at least a portion of the object, in particular a thermal loss factor (a); heat flux away from or towards at least a portion of the object.

Some of the model parameters may be related to the properties of the object and/or the environment. Thus, either adjusting the model parameter or detecting that, using fixed model parameters, there is insufficient match between a measured temperature time course and a derived temperature time course, may enable to obtain information regarding the object and/or the environment.

The object may comprise an entire pipeline installation or an electrical cable installation. The portion of the object may for example relate to a section of a pipe, a pump, a valve or a section of an electrical cable or a joint of an electrical cable. Thus, the thermal capacity may comprise plural values for thermal capacities of plural portions of the object, such as a pipe portion, a valve portion, a pump portion and so on and all these values of the thermal capacities may be included as model parameters. The same holds for the thermal resistance which may also include plural values of thermal resistances of plural portions of the object. Furthermore, also the surrounding medium or material may be subdivided in regions having different thermal capacities and different thermal resistances, all these thermal capacities and thermal resistances of the different environment portions may be included as model parameters.

The model parameter related to the thermal loss may in particular be related to an electrical cable which thermal loss may in particular depend on an electrical isolation around conductors of the cable. The heat flux away from or towards at least a portion of the object may in particular relate to the case where the object is a pipeline. When oil or gas having a particular temperature is conveyed within the pipeline, there may be a heat flux away from or towards the pipeline. Knowing the temperature of the medium, such as oil or gas conveyed within the pipeline, and knowing the volume flux of the medium, may allow to theoretically derive a heat flux away from or towards the pipeline. When the heat flux determined by or using the knowledge of the temperature and the flux of the medium does not match the heat flux as derived from the temperature time course, it may indicate that the pipeline is at the considered location faulty or damaged.

The load the object is subjected to may be an electric current (being carried in an electric cable) or may be considered to be a temperature load, such as a temperature load a pipeline is subjected to when a medium is conveyed within the pipeline. Thus, load may be construed in a broad manner to include according to embodiments, any influence the object is subjected to which may change the temperature of the object.

According to an embodiment of the present invention, values of a first set of model parameters including at least one parameter, in particular thermal capacity of at least a portion of the object and/or thermal resistance of at least a portion of the object and/or thermal capacity of the surrounding material, are held fixed during the adjusting of the model parameters, wherein the values of a first set are determined by at least one of the following: physical modeling of at least a portion of the object and/or the environment and/or the surrounding material and/or installation properties of at least a portion of the object, in particular performing a finite element calculation, in particular according to IEC standard 60287; weather data; a learning phase in which training time courses of measured temperatures of the fiber are acquired.

When a first set of parameters is held fixed, the adjusting the remaining parameters may be performed with higher accuracy or in a faster and more reliable manner. In particular, those model parameters may be held fixed which are supposed to be constant, even if a portion of the object may be deteriorated or damaged. Weather data may be utilized to derive the properties of the surrounding environment, in particular the surrounding soil, in particular regarding humidity, temperature and the like. Furthermore, geological data may be included in order to acquire information regarding the material of the environment surrounding the object which may have particular heat capacity and heat resistance.

During a learning phase, the fiber may be held, at a particular location, at a known temperature and the optical signal may be analyzed and analysis parameters may be adjusted such that the temperature derived from the optical measurement signal substantially matches the known temperature the fiber is subjected to at the considered location.

According to an embodiment of the present invention, values of a second set of model parameters including at least one parameter, in particular thermal resistance of the surrounding material and/or thermal loss of at least a portion of the object and/or a heat flux from or towards the object, are variable and are optimized during the adjusting of the model parameters.

The second set of model parameters may in particular include those model parameters which are suitable for detecting the condition of the object when it is required to adjust them. For example, if thermal loss is required to be adjusted, it may indicate that an electrical cable is faulty at a particular location or a pipeline is leaky at a particular location. The pipeline may e.g. be detected to be leaky at a particular location when the heat flux from or towards the pipeline needs to be adjusted during the method.

According to an embodiment of the present invention, the thermal model models thermal properties of at least: a heat source or heat sink, in particular electric current carried in a cable or a product conveyed in a pipeline; material between at least a portion of the object and the optical fiber; and at least a portion of the material beyond the fiber, wherein the thermal model is in particular implemented as an equivalent thermal circuit. The equivalent thermal circuit may be considered to be equivalent to an electrical circuit having capacitors and resistors connected in a particular arrangement having particular connectivity.

The equivalent thermal circuit may for example model the temperature of the object as a terminal. This object temperature terminal may be connected via a thermal loss element to a lower temperature terminal. Parallel to the thermal loss element, the thermal capacity of the object may be connected. To the object temperature terminal may be connected the thermal resistance of the object which is in series connected with the thermal resistance of the surrounding soil beyond of which an ambient temperature terminal may be arranged. The heat capacity of the soil may also be connected between the thermal resistance of the soil and the lower temperature terminal. An equivalent circuit is known in the art. Thereby, the method may easily be implemented.

According to an embodiment of the present invention, the object comprises an electric cable or a pipeline, wherein the load comprises an electric current or a medium, in particular oil or gas having a (e.g. known) temperature, being conveyed within the pipeline, wherein in particular the object comprises at least two cable sections, in particular joined together by a joint, and/or wherein in particular the object comprises a pipe and a pump and/or a valve, wherein the thermal model takes into account when the optical fiber has different distance from the pipe than from the pump and/or valve. Thereby, the method is suitable for monitoring an electric cable or a pipeline.

According to an embodiment of the present invention, the thermal model applies to plural locations along the object, having individual values of the model parameters in dependence of the respective location. As is known in distributed temperature sensing using an optical cable, the temperature at plural locations of the optical fiber can be determined. In turn, the temperature at plural locations along the object may be inferred from the measured temperature time course and using the thermal model either after adjusting at least one model parameter or comparing the measured time course with a derived time course using other information. The spatial resolution of the method may for example be between 1 m and 10 m. Other values are possible.

The method steps of measuring, adjusting and comparing may be repeated plural times over time. Thereby, temperature changes of the condition of the object may effectively be monitored.

The alarm may in particular be triggered if it is determined that not an external influence is the reason for the change of one model parameter but the changed condition or state of the object is determined to be the cause of the observed temperature behavior.

According to an embodiment of the present invention, the method further comprises suppressing an alarm, if the temperature of the object is above a threshold, but the model parameters do not indicate a deterioration of the object. If for example the thermal loss associated with the object or a portion of the object is not in contradiction or not deviating from the expected thermal loss for a healthy and unimpaired object, the alarm may be suppressed, thereby avoiding false alarms. The temperature of the object may for example be above the threshold without the object being damaged, for example in the case where the temperature of the environment has increased or the thermal resistance of the surrounding soil has changed or the thermal capacity of the surrounding soil has changed due to the weather conditions.

According to an embodiment of the present invention, the method further comprises at least one of the following: considering measurement of temperature at inlet and/or outlet of the pipeline; estimating a temperature change along the pipeline; applying a real time transient model; acquiring measurement data from a further fiber installed within the pipeline; acquiring actual and/or historic ambient temperature values by further sensors or looping out the fiber into the atmosphere; receiving data from a weather database. Considering one or more of the above-mentioned issues may improve the method further. For example, a further fiber may allow averaging of measurement signals.

It should be understood that features, individually or in any combination, disclosed, described or explained in the context of a method for estimating a condition of an object may also, individually or in any combination, apply to an arrangement for estimating a condition of an object according to an embodiment of the present invention and vice versa.

According to an embodiment of the present invention it is provided an arrangement for estimating a condition of an object, in particular a cable or a pipeline, and/or material, in particular soil, surrounding the object, the arrangement comprising: a distributed temperature sensing system employing the optical fiber adapted to measure a time course of values of the temperature of the optical fiber in proximity of the object; a processor adapted: to adjust a value of at least one model parameter of plural model parameters of a thermal model, in particular relating to thermal properties of the object and the surrounding material, based on the measured temperature time course, and to compare the adjusted value of at least one model parameter with a value determined theoretically and/or based on physical modeling and/or measured from another information source and/or predetermined and/or based on a value of a load and/or temperature the object is subjected to, to estimate the condition of the object and/or the surrounding material.

According to another embodiment of the present invention it is provided an arrangement for estimating a condition of an object, in particular a cable or a pipeline, and/or material, in particular soil, surrounding the object, the arrangement comprising: a distributed temperature sensing system employing the optical fiber adapted to measure a time course of values of the temperature of the optical fiber in proximity of the object; a processor adapted: to derive, using a value of a load and/or a temperature the object is subjected to, a time course of temperature values of the optical fiber based on a thermal model having plural model parameters, and to compare the measured temperature time course with the derived temperature time course, to estimate the condition of the object and/or the surrounding material.

The plural model parameters may either be adjusted based on the measured temperature time course or the model parameters may be held (at least partially) fixed and a temperature time course may be derived from other information or data than the measured temperature time course and may be compared with the measured temperature time course in order to detect a match or a deviation which deviation may then indicate the condition of the object and/or the environment.

Embodiments of the present invention are now described with reference to the accompanying drawings. The invention is not restricted to the illustrated or described embodiments.

Brief description of the figures

Fig. 1 illustrates a graph with a number of time courses as considered in embodiments of the present invention;

Fig. 2 illustrates an equivalent circuit diagram representing a cable and soil portions as employed in embodiments of the present invention;

Fig. 3 illustrates an equivalent circuit diagram representing a pipeline and the environment as considered in embodiments of the present invention; and

Fig. 4 schematically illustrates an arrangement for estimating a condition of an object according to an embodiment of the present invention which is configured to carry out a method for estimating a condition of an object according to embodiments of the present invention.

Detailed description of embodiments

According to embodiments of the present invention, a distributed temperature sensing system may measure the temperature (of an optical fiber) spatially and temporarily resolved. Embodiments of the present invention may be applied for condition estimation of a cable or a pipeline system. The load on the cable system, for example electrical current conveyed through the cable system, may be known or given. This may allow for estimation of the thermal properties of the cable and the parameters involved using a suitable model. One embodiment of the present invention utilizes a thermal model of an electrical cable similar to a rating system and applies it to every location of the cable. This may allow for the optimization and tracking of several parameters of the cable installation using a suitable parameter estimation algorithm (for example Kalman filter, least square optimization, ...).

Embodiments of the present invention may allow for real-time monitoring of a cable state at every location along the cable. Embodiments of the present invention provide means for automatic alarming on increased losses, cable degradation and/or variations of the installation. Further, embodiments may indicate which of those factors is the reason for the problem.

According to one embodiment of the present invention, a thermal model having model parameters is employed and the model parameters are (at least partly) adjusted based on measurement data from a distributed temperature sensing system. Thereby, parameter optimization techniques are used in thermal rating systems to determine a priori uncertain parameters of the system, for example the thermal soil properties. Here, an additional parameter $\alpha(t)$ may be tracked which relates the produced heat of an electrical cable to the expected joule-losses:

$$W_{est}(t) = \alpha(t)W_{th}(t),$$

where West(t) is the total losses estimated from the measurements and Wth(t) are the losses estimated as proportional to the square of the load or from more advanced physical modeling of the original electrical cable, such as for example according to IEC standard 60287.

If the cable is working as expected with no damage, $\alpha(t)$ may be set to 1. $\alpha$ may be considered as a loss factor which, when deviating from 1, measures the deviation of the losses as derived from the temperature time course and the losses estimated from for example the electric current and the electric resistance of the cable, such as that the losses may be given as $R \cdot I^2$, wherein R is the electrical resistance and I is the electric current. If $\alpha$ deviates from 1 (for example after adjusting the model parameter according to the measured temperature time course), it may indicate that the electric cable is somehow damaged. Embodiments of the present invention allow setting an alarm threshold on that property which triggers on a significantly raised value of $\alpha(t)$. A raise of $\alpha$ means that the cable has unexpectedly high loss. Alternatively, it may be monitored, that $\alpha$ is gradually increasing which may indicate that there is a progressive degradation of the electric cable.

According to an embodiment of the present invention, the calculation of the model parameters or adjustment of the model parameters (such as the loss factor $\alpha$) may be performed for each temperature measurement location (along the optical fiber and thus along the object to be monitored) individually, thereby allowing to localize problematic portions of the electric cable.

In an analogous approach or manner, also the heat capacity and/or the heat resistance of the soil surrounding the electric cable may be considered as model parameters which may be adjusted during the condition estimating method. Thereby, the heat capacity and heat resistance of the soil may simultaneously be tracked. When also the condition of the surrounding environment or soil is monitored, it may allow discrimination if a hotspot (of a cable) is caused by internal defects of the electric cable (a change of $\alpha(t)$, in particular increased) or external variations (for example change of burial depth, wetting or drying out of soil). It may be advantageous to keep the model as simple and flexible as possible and define model parameters depending on the particular application. For example, if a joint of an electric cable is intended to be monitored, where the sensor fiber might be placed at a more remote location, this may be taken into account. Thus, the distance of the optical fiber from different object portions may be taken into account for condition monitoring. Accurate modeling of a full joint including the probably inaccurate placement of the sensor may be difficult. In this case, a generic model, for example a part representing the heat source, the material up to the sensor and a part representing the soil beyond the sensor, may be used.

Generally, the model may be set up or defined by applying a "learning phase" where it may be assumed that the cable is unimpaired and works without any problem, for example directly after installation. During the "learning phase", the relevant initial parameters of the model may be determined which may reflect the situation, where the cable is unimpaired and no damage is present. The relevant parameters may not necessarily represent physical values of the losses or the surrounding, but may be used as a reference state from which changes and deviations are tracked. In case of significant changes (for example loss or soil thermal resistance increase), the system may be able to detect and monitor the changes.

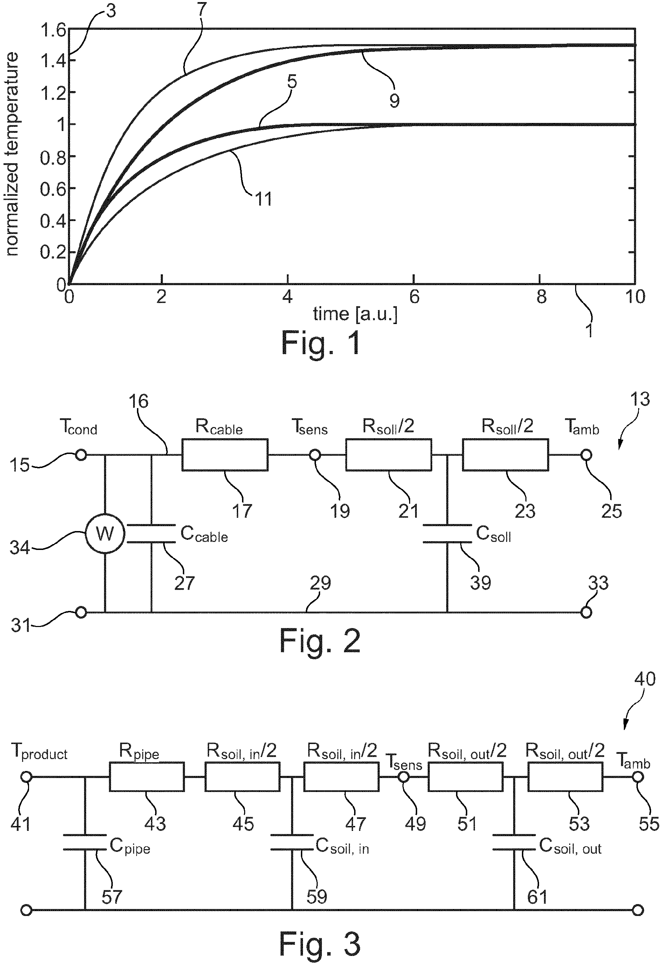

Fig. 1 illustrates derived temperature time courses for a number of model parameters as considered in embodiments of the present invention. Thereby, an abscissa 1 denotes the time, while an ordinate 3 denotes the normalized temperature.

The curve 5 illustrates a measured or derived temperature time course for the situation that an electrical cable is unimpaired and exhibits no damage. The curve 7 represents the measured or derived temperature time course when the loss factor $\alpha$ has increased by 50%, thus, $\alpha$ is set to 1.5. As can be observed, the measured or derived time courses 5 and 7 are considerably different. In turn, when the temperature time course 7 is measured, the loss factor $\alpha$ may be adjusted according to an embodiment of the present invention from 1 (curve 5) to the value of 1.5 (curve 7) so that the measured time course matches with a temperature time course derived using the thermal model. Thereby, when measuring the time course 7, it may be concluded that the electric cable is damaged at a particular location.

The curve 9 corresponds to the case where the environment or soil has 50% increased thermal resistance and the curve 11 corresponds to the case where the environment or the soil surrounding the electric cable has 50% increased thermal capacity. Thus, it can be appreciated from Fig. 1 that changes in different model parameters give rise to different temperature time courses as would be derived or measured using the distributed temperature sensing system.

In particular, the curves in Fig. 1 show how different variations of relevant model parameters affect the response of the temperature after a step in load (at time = 0). One can clearly observe that each of the parameters of interest shows a different effect on the temperature time course. Loss and thermal resistance increase result in a higher steady-state temperature while thermal resistance increase additionally changes the time constant to reach that state. Increased thermal resistance of the installation changes at the time constant but leaves the steady-state temperature unaffected.

Each of the three model parameters considered above, i.e. the loss factor $\alpha$, the thermal resistance of the soil and the thermal capacity of the soil may have its own signature. A step load is chosen in Fig. 1 for simplicity of the argumentation but with a suitable algorithm (like the previously mentioned Kalman filter) and is not limited to neither a step-like load change nor a steady-state condition afterwards. Instead, also continuous load changes may be covered by embodiment of the present invention. To distinguish the above-mentioned effects, the data needed to be evaluated should cover approximately the time virtually needed to reach the steady-state. This should be around 5 times the time constant of the system which is usually the thermal time constant of the soil. The soil time constant may be typically around 1 week. To achieve a reasonable accuracy of all parameters, in particular the model parameters, one would need a month or longer of data to evaluate.

The previously described method may require an experienced person to generate a thermal model of the cable and the environment to start with.

It may be desirable that the effort during realization of a certain estimation is reduced. This may be achieved by a self-learning algorithm which may determine the relevant parameters in a learning phase or in many cases during full operation. This may be reached by extending the model to a non-local version.

The optical fiber of a distributed fiber optical sensing system allows the acquisition of data (in particular temperature) at multiple locations almost simultaneously. Thereby, embodiments of the present invention model the system under consideration, for example electrical cable or pipe system, in time and also in space. Some of the model parameters may vary with position others do not at all or may vary only very weekly.

Fig. 2 illustrates an equivalent circuit 13 which may be considered in embodiments of the present invention. The equivalent circuit 13 illustrated in Fig. 2 in particular applies to an electric cable and may be applied or defined for each location individually. Thus, for each location of the electrical cable, the model parameters of the equivalent circuit 13 may be adjusted, in particular optimized, or, when not adjusted, a deviation between a derived temperature time course and a measured temperature time course may indicate that one or more of the model parameters are not accurately reflecting the state or condition of the object. Thereby, locations of for example increased losses or increase soil resistivity, etc. may be found using the method. Thereby, the common knowledge on cable ratings may be used and fixed values for the resistance and capacitance of the cable may be used. It may be very reasonable that the thermal properties of the cable do not change with each location and the thermal properties of the soil do not vary significantly every sample point of the temperature measurement.

In the equivalent circuit 13 illustrated in Fig. 2, the terminal 15 ($T_{cond}$) indicates the temperature of the object, i.e. the temperature of the electric cable. The resistor 17 ($R_{cable}$) represents the thermal resistance of the cable. The terminal 19 ($T_{sens}$) represents the temperature as measured by the distributed temperature sensing system. The resistors 21 and 23 represent the half of the thermal resistance of the soil between the electrical cable and the optical fiber delivering the DTS signals. The terminal 25 ($T_{amb}$) represents the ambient temperature. The capacitor 27 ($T_{cable}$) represents the thermal capacity of the electrical cable and the capacitor 39 ($C_{soil}$) represents the thermal capacity of the soil. These capacitors are connected in parallel between the upper branch (between terminals 15 and 25) and a lower branch 29 between terminals 31 and 33 representing a lower temperature than the temperature of the object. Between the upper branch 16 and the lower branch 29, further, a thermal loss element 34 is connected which may be identified as $W_{est}$ (in the equation above) being the estimated heat loss of the object under consideration.

Some of the model parameters illustrated in Fig. 2 may be considered as variable and some may be considered as fixed, for example fixed may be considered to be $C_{soil}$, $C_{cable}$ and $R_{cable}$. Variable may be considered the thermal loss element 34 and the thermal resistance of the soil 21, 23 as well as the ambient temperature 25 and the temperature of the object 15. In other embodiments, other parameters are considered to be fixed and other are considered to be variable and are adjusted.

Having a model containing equivalent circuits for each location with no precalculated values for the parameters but the circuits sharing some of the parameters (like $C_{cable}$, $R_{cable}$, ...) which are optimized globally, one can improve the stability and significance of the conclusions drawn from the deduced parameters. And as there is no pre-engineering of the algorithm required one could call this a self-learning system.

Also the "learning phase" described above might be ceased as the majority of locations will not have any error, and due their weight in the calculation will provide good estimations even if there is some location with a fault.

A similar approach can be used for detection of untypical behavior of pipelines. This can be for example leakages or unwanted state changes of the product inside the pipe (e.g. waxing) which both under certain circumstances affect the temperatures of a fiber optic cable installed in the soil around the pipe. However, as there are other temperature effects caused by the pipeline itself (changing product temperature, variation in transport rate, maintenance periods) or the environment (diurnal/seasonal cycles, burial properties variations) these can mask the temperature effects of the event of interest. A suitable physical model describing the heat transfer from different known heat sources to and from the cable allow for detection of untypical behavior, which allow from the characteristics of the change to deduce information on the source of change.

Fig. 3 schematically illustrates an equivalent circuit 40 representing a thermal model for monitoring a pipeline. The equivalent circuit model 40 may be similar as set up in thermal rating calculations. Alternatively, a finite element method calculation may be performed. Depending on the design of the thermal model and the external temperature effects, additional measured input values may improve the results of the model. This may be necessary in the case of modeling pipelines:
Actual and historic local temperature values of the transported fluid inside the pipe may be mandatory which could be determined by

- Measurements of the temperature on the inlet and outlet of the pipe combined with a suitable model of the cool-down along the distance of the pipe. This may work well if the pipeline operates in a steady-state temperature condition.

- The above point may be improved by using the results of a real-time transient model (RTTM) of the pipeline.

- A secondary optical fiber may be installed inside the pipe to determine the actual temperature distribution in situ of the conveyed medium, such as oil or gas.

Actual and historic temperature of the ambient may be necessary, desirable or mandatory which could be determined by

- additional external sensors
- segments of the sensors fiber looped out and placed at suitable locations to be exposed to the environment or the ambient
- a local weather database may be accessed to obtain approximate values of the ambient temperature.

In Fig. 3, the terminal 41 ($T_{product}$) denotes the temperature of the medium conveyed within the pipe. The resistor 43 ($R_{pipe}$) denotes or models the thermal resistance of the pipe. The resistors 45, 47 each model half of the thermal resistance of the (internal) soil between the optical fiber and the pipeline. The terminal 49 ($T_{sens}$) denotes the temperature as sensed by the optical fiber using the distributed temperature sensing system. The resistors 51, 53 each denote half of the thermal resistance of the outside soil. The terminal 55 ($T_{amb}$) denotes the temperature of the ambient atmosphere. The capacitors 57 ($C_{pipe}$), 59 ($C_{soil,in}$) and 61 ($C_{soil,out}$) denote the thermal capacities of the pipeline, the inside and outside soil, respectively. Thereby, Soil,In denotes soil portions of a cylinder having same center axis as the pipeline and having a radius as distance of the location of the fiber cable from pipeline center. Soil,out denotes all soil outside of the previously described cylinder.

The splitting of soil thermal capacity may allow to represent the temperature at the sensor location in the simplified discretized thermal model.

Embodiments of the present invention allow to trigger alarms or suppress alarms satisfying in particular criteria.

For detection of leakages different approaches are possible:

1. Leakage of gases experiencing a Joule-Thomson cooling

If temperature drops are in conflict with the model prediction:
Alarming could be achieved by a certain threshold exceeded

If this threshold is adapted according to the current quality of the model and the measured data false alarms can be reduced. A suitable distance measure is for example the Mahalanobis distance in case of usage of Kalman filter or other probabilistic algorithms.

2. Leakage of liquids having an initial temperature difference to the ambient.

If temperature drops or rises are in conflict with the model prediction; alarming could be performed as above

3. Leakage of liquids having no significant temperature difference to the ambient.

Leakage will not affect the temperature of the sensor directly, but the liquid saturating the pores will affect the properties of the soil. It will typically rise the thermal conductivity and capacity of the previously unsaturated soil. Thus, monitoring of the thermal parameters of the soil can reveal leakage in this case

However, it should be noted that accurately tracking the soil parameters is a difficult task, and such a system will be prone to false alarms

4. State changes of the transported product

States changes may involve releasing or consuming latent heat. If part of the model tracks the heat transfer to environment, deviations of that could be detected as the temperature rises or falls unexpectedly.

5. State changes affecting the thermal properties of the pipe wall

This will also effect the heat transfer from the transported product towards the sensor. As for example the heat resistance of the pipeline wall increases with deposed solid material

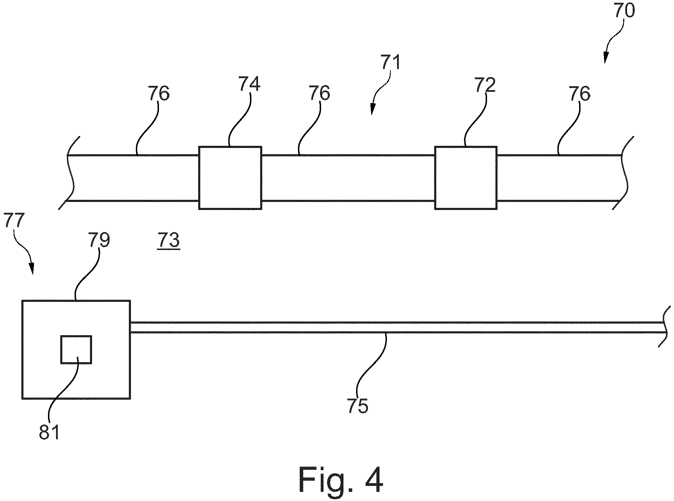

Fig. 4 schematically illustrates an arrangement 70 for estimating a condition of an object 71, in the present case an electrical cable, and also for estimating the condition of material 73 surrounding the object 71, in particular being between the object 71 and an optical fiber 75 which is part of a distributed temperature sensing system 77. The distributed temperature sensing system 77 comprises a light source, a light detector and a processor in the DTS module 79 as is known in the art. The light source is configured to generate light pulses and supply them into the optical fiber 75. Depending on the condition, in particular temperature of the optical fiber 75, the optical properties along the optical fiber 75 may temporarily change which will affect the scattering, in particular Rayleigh scattering of the introduced light. The scattered or reflected light is, time-resolved, detected by the light detector and carries information about the change of the refractive index, spatially resolved. The received light signals are processed and analyzed to derive the temperature at every location along the fiber 75. Thereby, employing the optical fiber 75 and the DTS-module 79, the arrangement 70 is configured for measuring a time course or values of the temperature of the optical fiber in proximity to the object 71 having objection portions 72, 74, e.g. joints, and 76, e.g. cable sections. The optical fiber 75 may or may not be integrated into an insulation of the cable 71.

Different from a conventional DTS-module 79, the processor 81 is adapted, according to one embodiment, to adjust a value of at least one model parameter (for example of a model as is illustrated in Fig. 2), of plural model parameters of a thermal model and to compare the adjusted value of the at least one model parameter with a value determined theoretically and/or based on physical modeling and/or measured from another information source and/or predetermined and/or based on a value of a load and/or a temperature the object is subjected to, to estimate the condition of the object 71 or/and the surrounding material 73.

According to another embodiment of the present invention, the processor is adapted to derive, using a value of a load and/or a temperature the object 71 is subjected to, a time course of temperature values of the optical fiber 75 based on a thermal model (for example thermal model 13 illustrated in Fig. 2) having plural model parameters, and to compare the measured temperature time course (for example one of the time courses 5, 7, 9 or 11 illustrated in Fig. 1) with the derived temperature time course, to estimate the condition of the object and/or the surrounding material.

## Claims

1. Method for estimating a condition of an object (71), in particular a cable or a pipeline, and/or material (73), in particular soil, surrounding the object, the method comprising:

   measuring a time course (Tsens, 5, 7, 9, 11) of values of the temperature of an optical fiber (75) using a distributed temperature sensing system (77) employing the optical fiber in proximity to the object;
   adjusting a value of at least one model parameter of plural model parameters of a thermal model (13, 40), in particular relating to thermal properties of the object and the surrounding material, based on the measured temperature time course;
   comparing the adjusted value of at least one model parameter with a value determined theoretically and/or based on physical modeling and/or measured from another information source and/or predetermined and/or based on a value of a load and/or temperature the object is subjected to, to estimate the condition of the object and/or the surrounding material.

2. Method for estimating a condition of an object (71), in particular a cable or a pipeline, and/or material (73), in particular soil, surrounding the object, the method comprising:

   measuring a time course (Tsens, 5, 7, 9, 11) of values of the temperature of an optical fiber (75) using a distributed temperature sensing system (77) employing the optical fiber in proximity to the object;

deriving, using a value of a load and/or temperature the object is subjected to, a time course of temperature values of the optical fiber based on a thermal model having plural model parameters;

comparing the measured temperature time course with the derived temperature time course, to estimate the condition of the object and/or the surrounding material.

3. Method according to claim 1, wherein adjusting the at least one model parameter includes at least one of the following:

performing a least-square optimization;
applying a Kalman filter;
applying a Wiener filter;
applying a Bayes filter;
applying a maximum likelihood estimation.

4. Method according to one of the preceding claims, wherein the plural model parameters include at least one of the following:

temperature of at least a portion of the object;
thermal capacity ($C_{cable}$, $C_{pipe}$) of at least a portion of the object;
thermal resistance ($R_{calble}$, $R_{pipe}$) of at least a portion of the object;
thermal capacity ($C_{soil}$) of the surrounding material between at least a portion of the object and the optical fiber and/or beyond the optical fiber;
thermal resistance ($R_{soil}$) of the surrounding material between at least a portion of the object and the optical fiber and/or beyond the optical fiber;
a parameter related to thermal loss ($W_{est}$) of at least a portion of the object, in particular a thermal loss factor (a);
heat flux away from or towards at least a portion of the object.

5. Method according to one of the preceding claims, wherein values of a first set of model parameters including at least one parameter, in particular thermal capacity of at least a portion of the object and/or thermal resistance of at least a portion of the object and/or thermal capacity of the surrounding material, are held fixed during the adjusting of the model parameters, wherein the values of a first set are determined by at least one of the following:

physical modelling of at least a portion of the object and/or the environment and/or the surrounding material and/or installation properties of at least a portion of the object, in particular performing a finite element calculation, in particular according to IEC standard 60287;

weather data;
a learning phase in which training time courses of measured temperatures of the fiber are acquired.

6. Method according to one of the preceding claims, wherein values of a second set of model parameters including at least one parameter, in particular thermal resistance of the surrounding material and/or thermal loss of at least a portion of the object and/or a heat flux from or towards the object, are variable and are optimized during the adjusting of the model parameters.

7. Method according to one of the preceding claims, wherein the thermal model models thermal properties of at least:

a heat source or heat sink, in particular electric current carried in a cable or a product conveyed in a pipeline;
material (73) between at least a portion of the object and the optical fiber;
and at least a portion of the material beyond the fiber,

wherein the thermal model is in particular implemented as an equivalent thermal circuit (13, 40).

8. Method according to one of the preceding claims, wherein the object (71) comprises an electric cable or a pipeline, wherein the load comprises an electric current or a medium, in particular oil or gas having, being conveyed within the pipeline, wherein in particular the object comprises at least two cable sections, in particular joined together by a joint, and/or wherein in particular the object comprises a pipe and a pump and/or a valve, wherein the thermal model takes into account when the optical fiber has different distance from the pipe than from the pump and/or valve.

9. Method according to one of the preceding claims, wherein the thermal model (13, 40) applies to plural locations along the object, having individual values of the model parameters in dependence of the respective location.

10. Method according to one of the preceding claims, further comprising:
repeating the method steps of measuring, adjusting and comparing plural times over time.

11. Method according to one of the preceding claims, further comprising:

triggering an alarm if at least one model parameter indicates a deterioration of at least a portion of the object and/or a heat loss above a threshold and/or a heat flux above a threshold and/or undesired variation in the surrounding material, wherein an alarm is in particular triggered, if at least one of the following applies:

a decrease or increase of the temperature of the object, in particular a pipeline, is not consistent with model prediction
at least one soil property indicates leakage of liquid or gas from the pipeline;
release or consumption of latent heat by a product conveyed by the pipeline is indicated;
release or consumption of heat by a thermodynamic process, in particular due to the Joule-Thomson effect, is indicated.

12. Method according to one of the preceding claims, further comprising:
suppressing an alarm, if the temperature of the object is above a threshold, but the model parameters do not indicate a deterioration of the object.

13. Method according to one of the preceding claims, further comprising at least one of the following:

considering measurement of temperature at inlet and/or outlet of the pipeline;
estimating a temperature change along the pipeline;
applying a real time transient model;
acquiring measurement data from a further fiber installed within the pipeline;
acquiring actual and/or historic ambient temperature values by further sensors or looping out the fiber into the atmosphere;
receiving data from a weather database.

14. Arrangement (70) for estimating a condition of an object (71), in particular a cable or a pipeline, and/or material, in particular soil, surrounding the object, the arrangement comprising:

a distributed temperature sensing system (77) employing the optical fiber adapted to measure a time course (Tsens) of values of the temperature of the optical fiber in proximity of the object;
a processor (81) adapted:

to adjust a value of at least one model parameter of plural model parameters of a thermal model, in particular relating to thermal properties of the object and the surrounding material, based on the measured temperature time course, and

to compare the adjusted value of at least one model parameter with a value determined theoretically and/or based on physical modeling and/or measured from another information source and/or predetermined and/or based on a value of a load and/or temperature the object is subjected to, to estimate the condition of the object and/or the surrounding material.

15. Arrangement (70) for estimating a condition of an object, in particular a cable or a pipeline, and/or material, in particular soil, surrounding the object, the arrangement comprising:

a distributed temperature sensing system (77) employing the optical fiber adapted to measure a time course (Tsens) of values of the temperature of the optical fiber in proximity of the object;
a processor (81) adapted:

to derive, using a value of a load and/or a temperature the object is subjected to, a time course of temperature values of the optical fiber based on a thermal model having plural model parameters, and
to compare the measured temperature time course with the derived temperature time course, to estimate the condition of the object and/or the surrounding material.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015241251 A1
- US 2017003177 A1
- DE 19921256 A1